# EUROPÄISCHE PATENTSCHRIFT

(11) **EP 0 597 819 B1**
(45) Veröffentlichungstag und Bekanntmachung des Hinweises auf die Patenterteilung: **19.06.1996**
(21) Anmeldenummer: 93890220.2
(22) Anmeldetag: 08.11.1993
(51) Int. Cl.: B01L 3/00, F16J 15/02

(54) **Dichtungselement**
Sealing element
Elément d'étanchéité

(30) Priorität: 12.11.1992 AT 2237/92
(43) Veröffentlichungstag der Anmeldung: 18.05.1994
(73) Patentinhaber: AVL Medical Instruments AG, CH-8207 Schaffhausen (CH)
(72) Erfinder: Huber, Wolfgang, A-8501 Lieboch (AT); Kleinhappl, Erich, A-8062 Weinitzen (AT); Steinböck, Wolf-Dietrich, A-8020 Graz (AT); Zach, Helmut, A-8046 Graz (AT)
(74) Vertreter: Krause, Walter, Dr. Dipl.-Ing.

(56) Entgegenhaltungen:
- EP-A- 0 117 381
- DE-A- 3 116 558
- DE-A- 3 818 148
- US-A- 2 766 999
- US-A- 4 407 516
- US-A- 4 803 053

## Beschreibung

Die Erfindung betrifft eine flüssigkeitsdichte Verbindung von in voneinander lösbaren Bauteilen angeordneten Kapillarkanälen, wobei zwischen den lösbaren Bauteilen ein Dichtungselement angeordnet ist

Derartige flüssigkeitsdichte Verbindungen werden beispielsweise in Analysengeräten, insbesondere zur Untersuchung von Körperflüssigkeiten verwendet und befinden sich an der Koppelstelle einzelner Meßmodule, Meßelektroden oder Anschlußnippel zu Flüssigkeitszuführsystemen. Ein derartiges Analysengerät ist beispielsweise aus der EP-A-0 297 082 bekannt.

Üblicherweise erfolgt eine solche Dichtverbindung mit scheibenförmigen Gummidichtungen sogenannten Quadring-Dichtungen oder O-Ring-Dichtungen.

So ist beispielweise aus der DE-C-38 18 148 ein Analysengerät mit mehreren Meßmodulen bekannt, deren Kapillarkanäle an den Verbindungsstellen durch derartige Quadring-Dichtungen lösbar verbunden sind.

Bei Quadring-Dichtungen muß man jedoch den Innendurchmesser der Dichtung größer als den Kanaldurchmesser wählen, um Abweichungen der Achsen der aneinanderstoßenden Kanäle auszugleichen. Dadurch ergeben sich größere Kammern im Kanalverlauf, in denen Flüssigkeitsreste zurückbleiben. Die Flüssigkeitsreste stören bei Anwendungen:
a) wo sich eine nachfolgende Flüssigkeit anderer Zusammensetzung mit den Flüssigkeitsresten der vorher durchgesaugten oder durchgepumpten Flüssigkeit vermischt und so ihre Zusammensetzung ändert, und wo man diese Änderung möglichst gering bzw. reproduzierbar haben will. (z.B. Analysengeräte zur Messung von Körperflüssigkeiten)
b) wo sich die im Bereich des Dichtungselementes zurückbleibenden Flüssigkeitsreste mit dem nachfolgend durchgesaugten Gas, z.B. Luft, sättigen (tonometrieren), und dieses aufgenommene Gas an die nachfolgende durchgesaugte Flüssigkeit abgegeben wird und so deren Gasgehalt verändert wird. (z.B. Analysengerät mit Blutgaselektroden zur Messung des pO2- und pCO2-Gehaltes von Blut)
c) wo man diese Kanäle möglichst schnell durch Durchsaugen mit Luft trocknen möchte. (Während ein Kanal mit geradem Verlauf sehr schnell zu trocknen ist, lassen sich die in den Toträumen zurückbleibenden Flüssigekeitsreste nur sehr langsam trocknen.)

Bei der O-Ring-Dichtung bleibt nachteiligerweise ein Kapillarspalt rund um den Kapillarkanal, welcher sich mit Flüssigkeit vollsaugt und nicht mehr gespült werden kann. Diese Flüssigkeitsreste im Kapillarspalt vermischen sich unreproduzierbar mit den nachfolgend eingesaugten Flüssigkeiten. Ein weiterer Nachteil ist der stufig ausgebildete Übergang von einem Kanal zum nächsten, wenn die Kanalachsen gegeneinander versetzt sind. Durch diese Stufenbildung kommt es ebenfalls zur Ausbildung von Toträumen, wo Flüssigkeitsreste nach dem Leersaugen zurückbleiben.

Die zurückbleibenden Flüssigkeitsreste stören auch hier in gleicher Weise wie in den Punkten a) bis c) beschreiben.

Aufgabe dieser Erfindung ist die Realisierung einer preiswerten, zuverlässigen, auftrennbaren, flüssigkeitsdichten Verbindung von Kapillarkanälen mit kleinem Durchmesser, welche mit möglichst homogenen Kanalverlauf aneinander gekoppelt werden sollen. Das Dichtungselement soll sowohl Verschiebungen der Kanalachsen bis zu einem Drittel des Kanaldurchmessers ausgleichen können, als auch eine möglichst geringe Oberfläche zum Kanal bilden.

Erfindungsgemäß wird diese Aufgabe dadurch gelöst, daß das Dichtungselement ein sich beim Zusammenfügen der Bauteile dem Kanalverläuf der Kapillarkanäle anpassendes, elastisches Schlauchstück und ein in einem der Bauteile verankerbares Halteelement aufweist. Dadurch wird einerseits eine zuverlässige Dichtheit erreicht, wobei Abweichungen der Kanalachsen stufenlos ausgeglichen werden können, anderseits ist durch den kontinuierlichen Kanalverlauf die Bildung von Schad- oder Toträumen nahezu ausgeschlossen. Der Innendurchmesser eines derartigen Dichtungselementes muß nur unwesentlich größer als der Kanalinnendurchmesser ausgebildet sein. Weiters ist der Dichtungsübergang zwischen den Bauteilen spaltfrei, sodaß bei wechselnden Saug- und Druckverhältnissen im Kapillarkanal keine Flüssigkeitsreste aus bzw. in den Zwischenraum zwischen den Bauelementen gelangen können.

Erfindungsgemäß ragen die beiden Enden des elastischen Schlauchstückes in gleichartige, zentrisch um die Kapillarkanäle angeordnete Ausnehmungen der beiden lösbaren Bauteile und liegen an Dichtflächen in den Ausnehmungen an. Jede Ausnehmung wird dabei jeweils von einer auf die Achse des Kapillarkanals normal stehenden Dichtfläche und einer daran anschließenden, sich konisch erweiterenden Dichtfläche begrenzt.

Das Dichtungselement wird von dem vorzugsweise einstückig mit dem elastischen Schlauchstück ausgeführten Halteelement auf einem der Bauteile sicher fixiert, sodaß beim Trennen der Bauteile das Dichtungselement auf diesem Bauteil haften bleibt.

In einer Ausführungsvariante der Erfindung ist vorgesehen, daß das Halteelement einen in eine ringförmige Nut eines der Bauteile einsetzbaren ringförmigen Grundkörper aufweist, welcher über einen kreisringförmigen Flansch mit dem elastischen Schlauchstück verbunden ist.

Als Material für das Dichtungselement eigenen sich erfindungsgemäß Elastomere wie NBR (Acrylnitril-Butadien-Kautschuk), IIR (Isopren-Isobutyl-Copolymer-Kautschuk), EPDM (Äthylen-Propylen-Kautschuk), Brombutyl-Kautschuk und Silikonkautschuk. Die angeführten Werkstoffen sollten vorteilhafterweise eine Shore-Härte von 40 bis 50 aufweisen.

Schließlich können die beiden lösbaren Bauteile erfindungsgemäß Paß- und Führungsflächen zur Schonung des Dichtungselementes aufweisen. Die dicht zu verbindenden Bauteile können dabei aus Metall oder Kunststoff bestehen.

Die Erfindung wird im folgenden anhand von Zeichnungen näher erläutert. Es zeigen:
- Fig. 1 und Fig. 2: flüssigkeitsdichte Verbindungen mit Dichtungselemente nach dem Stand der Technik,
- Fig. 3: eine erfindungsgemäße flüssigkeitsdichte Verbindung mit einem Dichtungselement zum Einbau von in voneinander lösbare Bauteile in einer Schnittdarstellung und
- Fig. 4: Details der flüssigkeitsdichten Verbindung nach Figur 3 mit eingebautem Dichtungselement.

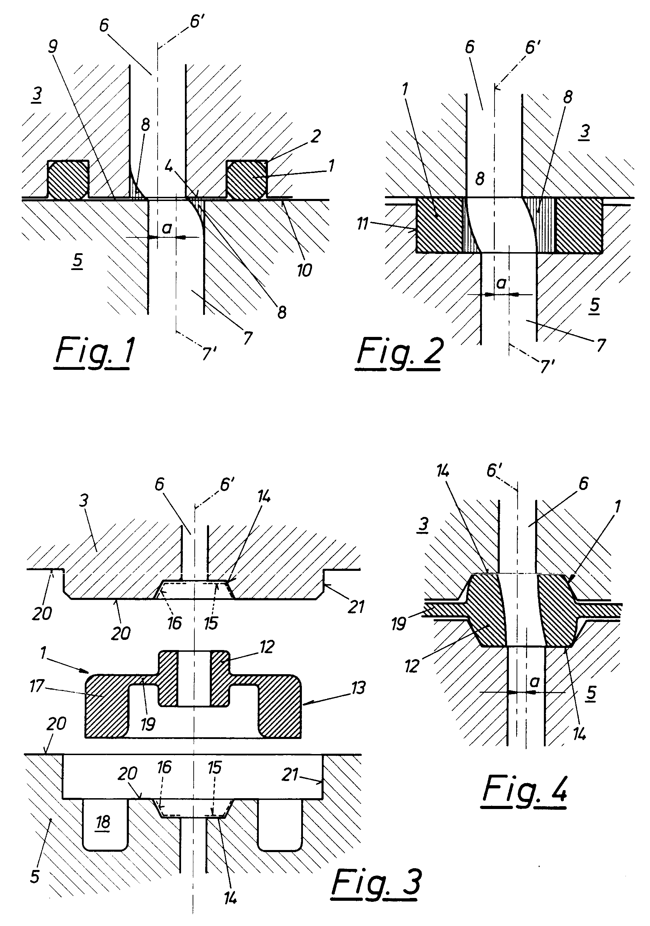

Bei dem in Fig. 1 dargestellten Dichtungselement 1 handelt es sich um eine bekannte O-Ring-Dichtung, bei welcher das Dichtungelement von einer Ringnut 2 eines der voneinander lösbaren Bauteile 3 aufgenommen wird und gegen eine Dichtfläche 4 des anderen Bauteils 5 gepreßt wird. Beim Zusammenfügen der Bauteile 3 und 5 kann es zu einer Abweichung a der beiden Kanalachsen 6' und 7' der Kapillarkanäle 6 und 7 kommen, welche zwar die Dichtwirkung der Verbindung nicht beeinflußt, aber zur Ausbildung von Toträumen 8 im Bereich des stufig ausgebildeten Überganges zwischen den Kapillarkanälen führt. In den Toträumen 8 kommt es zur Ansammlung von Flüssigkeitsresten. Weiters bildet sich ein störender Kapillarspalt 9 zwischen den Dichtflächen 4 und 10 der beiden Bauteile 3 und 5, welche bis zum Dichtelement 1 reicht und ebenfalls nicht auswaschbare Flüssigkeitsreste aufnimmt.

Zur Verbindung von Kapillarkanälen werden gemäß Fig. 2 auch Dichtungselemente verwendet, welche als Quadring-Dichtung bekannt wurden. Um Abweichungen a der Kanalachsen 6' und 7' beim Zusammenbau der Bauteile 3 und 5 auszugleichen, muß das in einer ringförmigen Ausnehmung 11 angeordnete Dichtungselement 1 einen größeren Innendurchmesser aufweisen, als die anstoßenden Kapillarkanäle 6 und 7. Dadurch ergeben sich ebenfalls störende Toträume 8, in welchen Flüssigkeitsreste zurückbleiben.

Das erfindungsgemäße Dichtungselement 1 bzw. die erfindungsgemäße flüssigkeitsdichte Verbindung kommt praktisch ohne Totvolumen bzw. Toträume aus, da hier ein elastisches Schlauchstück 12 vorgesehen ist, welches sich beim Zusammenfügen der Bauteile 3 und 5 dem Kanalverlauf der Kapillarkanäle 6 und 7 stufenlos anpaßt. Dies ist auch dann der Fall, wenn die beiden Kanalachsen 6', 7' eine Abweichung a bis zu einem Drittel des Kanaldurchmessers (von ca. 0,6 mm) aufweisen. Das elastische Schlauchstück 12 weist ein vorzugsweise einstückig angeformtes Halteelement 13 auf, welches im Bauteil 5 verankert ist. Zur dichten Verbindung der Kapillaren 6 und 7 ragen die beiden Enden des elastischen Schlauchstückes 12 in gleichartige, zentrisch um die Kapillarkanäle 6, 7 angeordnete Ausnehmungen 14, wo sie an Dichtflächen 15 und 16 anliegen. Jede Ausnehmung 14 weist eine auf die jeweilige Achse 6', 7' normal stehende Dichtfläche 15 auf, welche in eine sich konisch erweiternde Dichfläche 16 übergeht.

Das Halteelement 13 ist über einen ringförmigen Grundkörper 17 in einer ringförmigen Nut 18 des Bauteiles 5 verankert und mit dem elastischen Schlauchstück 12 des Dichtungselementes 1 mit einem kreisringförmigen Flansch 19 verbunden. Beim Trennen der Bauteile 3 und 5 verbleibt somit das Dichtungselement 1 im Teil 5. Die beiden Bauteile 3 und 5 sind beispielsweise Meßmodule oder Meßelektroden einer Analyseneinrichtung.

Zur Schonung des Dichtungselementes 1 vor zu großem Druck- und Scherkräften beim Zusammenbau weisen die Bauteile 3 und 5 Paßflächen 20 sowie Führungsflächen 21 auf.

## Patentansprüche

1. Flüssigkeitsdichte Verbindung von in voneinander lösbaren Bauteilen (3, 5) angeordneten Kapillarkanälen, wobei zwischen den lösbaren Bauteilen ein Dichtungselement (1) angeordnet ist, **dadurch gekennzeichnet**, daß das Dichtungselement (1) ein sich beim Zusammenfügen der Bauteile (3, 5) dem Kanalverlauf der Kapillarkanäle (6, 7) anpassendes, elastisches Schlauchstück (12) und ein in einem der Bauteile (5) verankerbares Halteelement (13) aufweist.

2. Flüssigkeitsdichte Verbindung nach Anspruch 1, **dadurch gekennzeichnet**, daß das elastische Schlauchstück (12) und das Halteelement (13) einstückig ausgeführt sind.

3. Flüssigkeitsdichte Verbindung nach Anspruch 1 oder 2, **dadurch gekennzeichnet**, daß die beiden Enden des elastischen Schlauchstückes (12) in gleichartige, zentrisch um die Kapillarkanäle (6, 7) angeordnete Ausnehmungen (14) der beiden lösbaren Bauteile (3, 5) ragen und an Dichtflächen (15, 16) in den Ausnehmungen (14) anliegen.

4. Flüssigkeitsdichte Verbindung nach Anspruch 3, **dadurch gekennzeichnet**, daß die Ausnehmungen (14) in den Bauteilen (3, 5) von einer auf die Achse (6', 7') des jeweiligen Kapillarkanals (6, 7) normal stehenden Dichtfläche (15) und einer daran anschließenden sich konisch erweiternden Dichtfläche (16) begrenzt sind.

5. Flüssigkeitsdichte Verbindung nach einen der Ansprüche 1 bis 4, **dadurch gekennzeichnet**, daß das Halteelement (13) einen in eine ringförmige Nut (18) eines der Bauteile (5) einsetzbaren ringförmigen Grundkörper (17) aufweist, welcher über einen kreisringförmigen Flansch (19) mit dem elastischen Schlauchstück (12) verbunden ist.

6. Flüssigkeitsdichte Verbindung nach einen der Ansprüche 1 bis 5, **dadurch gekennzeichnet**, daß die beiden lösbaren Bauteile (3, 5) Paß- und Führungsflächen (20, 21) zur Schonung des Dichtungselementes (1) ausfweisen.

7. Flüssigkeitsdichte Verbindung nach einen der Ansprüche 1 bis 6, **dadurch gekennzeichnet**, daß die beiden voneinander lösbaren Bauteile (3, 5) Meßmodule oder Meßelektroden einer Analyseneinrichtung sind.

8. Flüssigkeitsdichte Verbindung nach einen der Ansprüche 1 bis 7, **dadurch gekennzeichnet**, daß das Dichtungselement aus Acrylnitril-Butadien-Kautschuk, Isopren-Isobutyl-Copolymer-Kautschuk, Äthylen-Propylen-Kautschuk, Brombutyl-Kautschuk oder Silikonkautschuk besteht.

## Claims

1. Fluid-tight connection of capillary channels running in components (3, 5) which are detachable from each other, a sealing element (1) being located between said detachable components, **characterized in that** the sealing element (1) is configured as a piece of flexible tube (12) adapting to the course of the capillary channels (6, 7) when the components (3, 5) are coupled, and a mounting element (13) anchored in one of the components (5).

2. Fluid-tight connection as in claim 1, **characterized in that** the flexible tube (12) and the mounting element (13) are made in one piece.

3. Fluid-tight connection as in claim 1 or 2, **characterized in that** the two ends of the flexible tube (12) project into identical recesses (14) concentric with the capillary channels (6, 7) in the two detachable components (3, 5), and that they are in contact with sealing surfaces (15, 16) in the recesses (14).

4. Fluid-tight connection as in claim 3, **characterized in that** the recesses (14) in the components (3, 5) are bounded by a sealing surface (15) normal to the axis (6', 7') of the respective capillary channel (6, 7), and a conically enlarging sealing surface (16) adjacent thereto.

5. Fluid-tight connection as in any of claims 1 to 4, **characterized in that** the mounting element (13) has a ring-shaped body (17) anchored in a ring-shaped groove (18) of one of the components (5), which body (17) is connected to the flexible tube (12) via an annular flange (19).

6. Fluid-tight connection as in any of claims 1 to 5, **characterized in that** the two detachable components (3, 5) are provided with fitting and guiding surfaces (20, 21) to ease stresses on the sealing element (1).

7. Fluid-tight connection as in any of claims 1 to 6, **characterized in that** the two detachable components (3, 5) are measuring modules or measuring electrodes of an analyzing unit.

8. Fluid-tight connection as in any of claims 1 to 7, **characterized in that** the sealing element is made of acrylonitrile butadiene rubber, isoprene-isobutylene copolymer rubber, ethylene-propylene rubber, bromobutyl rubber, or silicone rubber.

## Revendications

1. Liaison étanche au liquide, reliant des canaux capillaires logés dans deux pièces séparables (3, 5) entre lesquelles est intercalé un joint d'étanchéité, caractérisée en ce que le joint d'étanchéité (1) comprend une pièce tubulaire (12) élastique dont la forme s'adapte au tracé des canaux capillaires (6, 7) à relier lorsqu'on assemble les pièces (3, 5), ainsi qu'un élément de maintien (13) pouvant s'ancrer dans une des pièces (5).

2. Liaison étanche selon la revendication 1, caractérisée en ce que la pièce tubulaire élastique (12) et l'élément de maintien (13) forment une seule pièce.

3. Liaison étanche selon la revendication 1 ou 2, caractérisée en ce que les deux extrémités de la pièce tubulaire élastique (12) pénètrent dans des évidements (14) des deux pièces séparables (3, 5) disposées de façon identique centrale autour des canaux capillaires (6, 7), et y sont appliquées sur des portées d'étanchéité (15, 16) de ces évidements.

4. Liaison étanche selon la revendication 3, caractérisée en ce que les évidements (14) creusés dans les pièces (3, 5) sont délimités par une portée d'étanchéité (15) perpendiculaire à l'axe du canal capillaire (6, 7) correspondant et prolongée par une portée d'étanchéité (16) évasée en cône.

5. Liaison étanche selon une des revendications 1 à 4, caractérisée en ce que l'élément de maintien (13) comporte un corps principal (17) de forme annulaire s'encastrant dans une rainure annulaire (18) d'une des pièces (5), ce corps (17) étant relié à la partie tubulaire élastique (12) par une bride annulaire (19).

6. Liaison étanche selon une des revendications 1 à 5, caractérisée en ce que les deux pièces séparables (3, 5) ont des portées de guidage et d'ajustage (20, 21) respectant le joint d'étanchéité (1).

7. Liaison étanche selon une des revendications 1 à 6, caractérisée en ce que les deux pièces séparables (3, 5) sont des modules ou des électrodes de mesure d'un appareil d'analyse.

8. Liaison étanche selon une des revendications 1 à 7, caractérisée en ce que le joint d'étanchéité est constitué d'un caoutchouc à base d'acrylonitrile-butadiène, de copolymère d'isoprène et d'isobutyle, d'éthylène-propylène, de bromobutyle ou de silicone.
